# DEMANDE DE BREVET EUROPEEN

(11) **EP 1 916 501 A2**
(43) Date de publication de la demande: **30.04.2008**
(21) Numéro de dépôt: 07291252.0
(22) Date de dépôt: 12.10.2007
(51) Int. Cl.: G01C 15/04

(54) **Borne topographique**

(30) Priorité: 25.10.2006 FR 0609383
(71) Demandeur: Gissinger, Jean-Edouard, 08800 Thilay (FR); Thevenin, Stéphane, 51420 Witry Les Reims (FR); Thevenin, Patrick, 08150 Remilly les Pothees (FR); Gissinger, Charles, 08800 Thilay (FR)
(72) Inventeur: Gissinger, Jean-Edouard, 08800 Thilay (FR); Thevenin, Stéphane, 51420 Witry Les Reims (FR); Thevenin, Patrick, 08150 Remilly les Pothees (FR); Gissinger, Charles, 08800 Thilay (FR)
(74) Mandataire: Laget, Jean-Loup

(57) **Abrégé**

Une borne topographique comporte une tête 1 de borne et un organe 2 d'ancrage. La borne est associée à un moyen 3 d'identification à distance

## Description

L'invention est relative à une borne topographique, apte à être utilisée pour définir des limites cadastrales, des limites de route, des limites de propriété, ou des délimitations de parcelle, notamment à l'occasion d'opérations cadastrales, de remembrements fonciers ou de toute autre application analogue.

Le document FR 2 244 159 décrit une borne utilisable pour définir les limites cadastrales, des limites de route et pour des applications analogues. Cette borne comprend une tête de borne et un organe d'ancrage indépendant de la tête de borne. La tête de borne contient un perçage central présentant une réduction de section droite entre les faces supérieure et inférieure de la tête de borne. L'organe d'ancrage peut coulisser librement dans le perçage central de la tête de borne, à l'exception de son extrémité supérieure dont la section droite est plus grande que la section du perçage central au niveau de la face inférieure de la tête de borne.

Le document FR 2 837 278 décrit une borne topographique comportant une tête de borne munie d'un épaulement et d'un perçage, ainsi qu'un organe d'ancrage muni d'une couronne de retenue et d'une partie allongée creuse avec au moins une ouverture débauchante, pour permettre le passage d'un moyen de verrouillage. L'organe d'ancrage est ouvert à l'extrémité de la partie allongée creuse et présente une conformation interne de guidage pour ledit moyen de verrouillage, lorsque ce moyen de verrouillage est poussé à l'intérieur de ladite conformation interne à l'aide d'un outil d'enfoncement.

Le document FR 2 769 977 décrit une borne cadastrale en deux parties, du type comportant une tête présentant un perçage central avec en partie supérieure un épaulement, et un piquet amarre équipé à son extrémité supérieure d'une collerette d'appui sur l'épaulement de ladite tête. Le tube du piquet comporte en partie haute un manchon déformable d'une longueur sensiblement égale à la distance séparant la base de la tête et l'épaulement. Lorsque la borne est munie à sa base d'un diaphragme de solidarisation du piquet, le manchon est d'une longueur telle qu'il fait saillie sous la tête pour former une butée anti-rebroussement pour le diaphragme.

Les bornes décrites dans les documents FR 2 244 159 et FR 2 837 278 donnent satisfaction pour les travaux de bornage et de repérage. Leur fonctionnement est amélioré en solidarisant la tête à l'organe d'ancrage, comme décrit dans le document FR 2 769 977.

Ces bornes comportent généralement sur la tête de borne un marquage par impression ou par gravage pour permettre une identification de propriétaire, de fonction, ou d'une autre qualité associée à la borne.

Au lieu d'effectuer un marquage directement sur la borne, il est également possible de lui ajouter un bouchon ou une pastille comportant la gravure ou le marquage d'identification.

Du fait que ces marquages ou gravures comportent généralement que des indications visuelles, divers inconvénients résultent de cette propriété.

En premier lieu, le nombre de données ou de caractères est limité par la taille de l'emplacement sur lequel ces données ou caractères sont marqués.

En deuxième lieu, pour pouvoir lire les caractères ou données marqués sur la borne, il est nécessaire qu'au moins la surface marquée de la borne soit toujours visible et apte à être lue.

En outre, du fait que le marquage est apparent, celui-ci peut être abîmé ou détérioré pour en empêcher la lecture.

Enfin, du fait que le marquage est apparent, les données ou caractères marqués sur la borne sont présentés au public et ne peuvent être gardés confidentiels.

Un premier but de l'invention est de remédier aux inconvénients de la technique connue, en permettant une identification de données ou de caractères relatifs à la borne sans nécessiter une visualisation de ces données ou caractères.

Un deuxième but de l'invention est d'augmenter le nombre de données ou caractères pouvant être associés à la borne. De permettre la mise à jour de ces données, et de les compléter au cours de la vie de la borne.

Un troisième but de l'invention est de permettre le repérage ou la détection d'une borne ensevelie ou cachée.

Un quatrième but de l'invention est de permettre d'assurer à volonté une confidentialité des données ou des caractères associés à la borne.

Un cinquième but de l'invention est de permettre d'assurer la traçabilité d'une borne, au niveau de sa fabrication et de sa mise en oeuvre sur le terrain.

L'invention a pour objet une borne topographique comportant une tête de borne et un organe d'ancrage, caractérisée par le fait que la borne est associée à un moyen d'identification à distance.
Selon d'autres caractéristiques alternatives de l'invention :
la tête de borne comporte un logement contenant un moyen d'identification à distance,
la tête de borne porte un bouchon portant un moyen d'identification à distance,
l'organe d'ancrage peut porter un moyen d'identification à distance,
ledit logement peut être ménagé en partie supérieure de la tête de borne,
ledit logement peut être ménagé en partie latérale extérieure de la tête de borne,
ledit logement peut être ménagé en partie inférieure de la tête de borne,
ledit logement peut être obturé par un couvercle amovible.

L'invention sera mieux comprise grâce à la description qui va suivre donnée à titre d'exemple en limitatif en référence aux dessins annexés dans lesquels :
La figure 1 représente schématiquement une vue en coupe en une élévation latérale d'un premier mode de réalisation de l'invention.
La figure 2 représente schématiquement une vue en coupe en élévation latérale d'un deuxième mode de réalisation de l'invention.
La figure 3 représente schématiquement une vue en coupe en élévation latérale d'un troisième mode de réalisation de l'invention.
La figure 4 représente schématiquement une vue en coupe en élévation latérale d'un quatrième mode de réalisation de l'invention.
La figure 5 représente schématiquement une vue en coupe en élévation latérale d'un cinquième mode de réalisation de l'invention.
La figure 6 représente schématiquement une vue en coupe en élévation latérale d'un sixième mode de réalisation de l'invention.

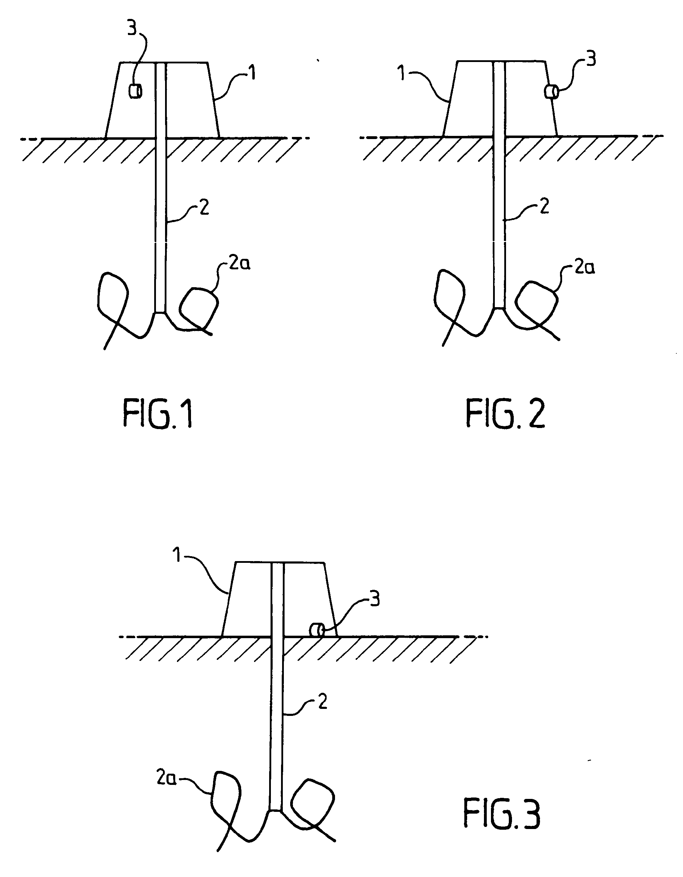

En référence aux figures 1 à 6, les éléments identiques ou fonctionnellement équivalents sont repérés par des chiffres de références identiques.

Sur la figure 1, un premier mode de réalisation de l'invention comporte une borne selon l'invention avec une tête 1 de borne, un organe 2 d'ancrage et un moyen 2a de verrouillage dans le sol.

Un moyen d'identification 3 est noyé dans la tête de borne, par exemple lors de la fabrication de la tête 1 de borne par un procédé de moulage d'un matériau durcissable.

A titre d'exemple, le moyen 3 d'identification à distance comporte une puce jouant le rôle de transpondeur permettant l'identification, la description de la borne et l'obtention d'informations complémentaires par interrogation à distance de bases de données correspondante.

Les puces jouant le rôle de transpondeur sont connues par les hommes du métier sous l'appellation « RFID » (Radio Frequency Identification Systems).

En implantant une puce transpondeur dans une tête de borne on peut ainsi repérer à distance et identifier une borne précise parmi un ensemble de bornes et céder à toutes les informations opérationnelles de l'environnement de la borne, par exemple notamment : (coordonnées topographique, fonctions de la borne, identification du géomètre ou du responsable de la pose de la borne et toutes les informations géographiques relatives au voisinage telles que indication du passage d'un réseau de gaz ou de conduite souterraine à proximité, l'alliage d'une route ou d'une voie.....).

On peut également prévoir de charger d'autres informations ou données confidentielles du fabricant ou du géomètre dans la puce transpondeur.

La technologie des puces transpondeurs repose sur l'émission de champs électromagnétiques réceptionnés par une antenne couplée à une puce électronique. Ce champ électromagnétique sert de vecteur à l'information entre la puce et son lecteur d'interrogation à distance, en permettant l'activation de cette puce.

Le système complet d'identification automatique par radiofréquence comporte par conséquent un lecteur qui transmet un signal selon une fréquence prédéterminée vers une ou plusieurs puces transpondeurs situées dans son champ de lecture.

Ces puces transpondeurs transmettent en retour un signal.

Lorsque les puces transpondeurs particulières sont interrogées par le lecteur un dialogue s'établit selon un protocole de communication prédéterminé pour l'échange des données correspondantes.

La puce transpondeur ou étiquette RFID est ainsi un support d'informations combinant un traitement de signal avec un stockage de données.

L'énergie nécessaire au fonctionnement de la puce transpondeur peut être fournie par une pile ou une batterie électrique interne à la borne, ou peut être alimentée à distance par le champ électromagnétique émis par le lecteur d'interrogation à distance.

Dans les deux cas, lorsque le champ électromagnétique balaye l'espace où se trouve la puce transpondeur, cette puce transpondeur détecte le signal et s'active pour transmettre en retour les informations au lecteur d'interrogation à distance.

Ainsi, grâce à l'invention les données peuvent être stockées en nombre plus important et peuvent être rendues confidentielles en prévoyant une autorisation ou une authentification des droits d'interrogation à distance. Les données peuvent également être mises à jour et complétées au cours de la vie de la borne, sans déplacer celle-ci.

Sur la figure 2, la tête 1 de borne comporte un logement ménagé sur une partie latérale extérieure pour recevoir le moyen 3 d'identification à distance.

Sur la figure 3, la tête 1 de borne comporte un logement ménagé en partie inférieure pour recevoir le moyen 3 d'identification à distance.

Dans les modes de réalisation des figures 2 et 3, le logement du moyen 3 d'identification à distance peut être constitué par une cavité réservée lors du moulage en résine ou en béton léger de la tête 1 de borne et obturé ensuite par tout moyen approprié.

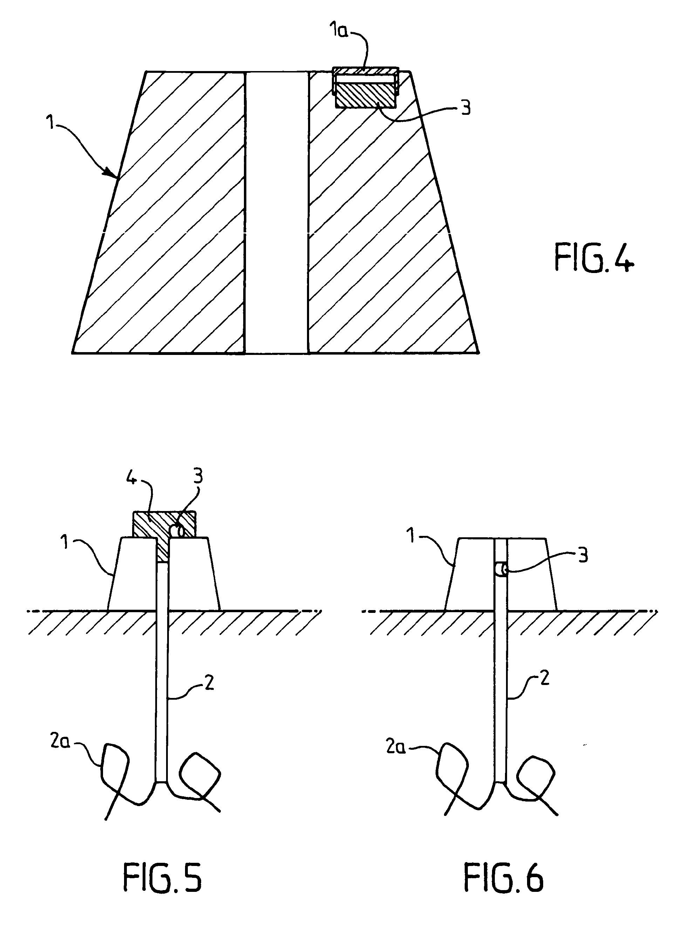

Sur la figure 4, la tête 1 de borne présente un logement en partie supérieure pour recevoir le moyen 3 d'identification à distance.

Le logement est obturé dans ce mode de réalisation par un couvercle 1a amovible, par exemple un capuchon encliquetable de manière étanche.

Cette disposition permet le remplacement périodique des moyens d'identification à distance, dans le cas d'évolutions des informations enregistrées sur le moyen d'identification à distance ou dans le cas d'évolutions technologiques des moyens d'identification à distance.

Sur la figure 5, la tête 1 de borne porte un bouchon 4 contenant un moyen 3 d'identification à distance.

Cette disposition est utilisée pour équiper de puces transpondeurs des bornes déjà installées.

Sur la figure 6, l'organe d'ancrage 2 porte le moyen 3 d'identification à distance, lequel est par exemple inséré dans le tube central de l'organe 2 d'ancrage après pose et déploiement des moyens 2a de verrouillage.

L'invention décrite en référence à plusieurs modes de réalisation particuliers, n'y est nullement imitée, mais couvre au contraire toute modification de forme et toute variante de réalisation dans le cadre et l'esprit de l'invention définie par les revendications annexées.

## Revendications

1. Borne topographique, comportant une tête (1) de borne et un organe (2) d'ancrage, **caractérisée par le fait que** la borne est associée à un moyen (3) d'identification à distance.

2. Borne selon la revendication 1 **caractérisée par le fait que** la tête (1) de borne comporte un logement contenant un moyen (3) d'identification à distance.

3. Borne selon la revendication 1 **caractérisée par le fait que** la tête (1) de borne porte un bouchon portant un moyen (3) d'identification à distance.

4. Borne selon la revendication 1 **caractérisée par le fait que** l'organe (2) d'ancrage porte un moyen (3) d'identification à distance.

5. Borne selon la revendication 2 **caractérisée par le fait que** ledit logement est ménagé en partie supérieure de la tête (1) de borne.

6. Borne selon la revendication 2 **caractérisée par le fait que** ledit logement est ménagé en partie latérale extérieure de la tête (1) de borne.

7. Borne selon la revendication 2 **caractérisée par le fait que** ledit logement est ménagé en partie inférieure de la tête de borne.

8. Borne selon l'une quelconque des revendications 5 à 6, **caractérisée par le fait que** ledit logement est obturé par un couvercle (la) amovible.
